# EUROPÄISCHE PATENTSCHRIFT

(11) **EP 3 645 234 B1**
(45) Veröffentlichungstag und Bekanntmachung des Hinweises auf die Patenterteilung: **13.10.2021**
(21) Anmeldenummer: 19705140.2
(22) Anmeldetag: 06.02.2019
(51) Int. Cl.: B29C 45/14, B29C 37/00

(54) **VERFAHREN ZUR HERSTELLUNG EINES FAHRZEUGZIERTEILS**
METHOD FOR PRODUCING AN VEHICLE DECORATION PART
PROCÉDÉ DE FABRICATION D'UN ÉLÉMENT DE GARNITURE D'UN VÉHICULE

(30) Priorität: 25.04.2018 DE 102018109999
(43) Veröffentlichungstag der Anmeldung: 06.05.2020
(73) Patentinhaber: HIB Trim Part Solutions GmbH, 76646 Bruchsal (DE)
(72) Erfinder: KELLER, Bernd, 75045 Walzbachtal-Jöhlingen (DE)
(74) Vertreter: Staeger & Sperling Partnerschaftsgesellschaft mbB
(86) Internationale Anmeldenummer: PCT/EP2019/052879
(87) Internationale Veröffentlichungsnummer: WO 2019/206479

(56) Entgegenhaltungen:
- DE-A1-102010 005 700
- DE-A1-102016 206 517

## Beschreibung

Die Erfindung betrifft ein Fahrzeugzierteil sowie ein zugehöriges Herstellungsverfahren zur Herstellung eines Fahrzeugzierteils.

Im Stand der Technik sind verschiedene Fahrzeugzierteile sowie zugehörige Herstellungsverfahren bekannt. Einige der im Stand der Technik offenbarten Fahrzeugzierteile werden aus einem Träger und einer mit einer Lackschicht beschichteten Zwischenschicht gebildet. Aufgrund der Kosteneffizienz und der Stabilität werden die Träger dabei zumeist aus einem faserverstärkten Kunststoff gespritzt. Bisher werden die Träger anschließend mit der Zwischenschicht beschichtet, welche in einem späteren Verfahrensschritt lackiert wird. Die Zwischenschicht ist dabei zumeist ein Holzfurnier bzw. Furnier, das durch mehrstufige mechanische und chemische Bearbeitung auf das Lackieren vorbereitet werden muss. Durch die Bearbeitungsschritte bei der Bearbeitung des Furniers, wie Schneiden, Schleifen und Beizen, wird seine Oberflächenstruktur im Wesentlichen entfernt, sodass sie sich nicht in der mit dem Lackieren gebildeten Lackschicht abzeichnet. DE102010005700 offenbart ein Verbundbauteil aus Polyurethan-Sandwichmaterialien mit einer farbigen Deckschicht.

Die Herstellung eines Zierteils für ein Fahrzeug mit einer solchen Zwischenschicht ist jedoch zeitaufwändig und teuer, da zusätzliches Material notwendig ist, das mechanisch bearbeitet und mit dem Träger gefügt werden muss. Wird die Lackschicht ohne die Zwischenschicht unmittelbar auf dem Träger ausgebildet, durchbrechen Fasern des Faserverbundmaterials die Lackschicht, wodurch die Lackschicht und das Zierteil optische Mängel aufweisen. Das Zierteil soll eine "Class A" Oberfläche bereit stellen, also eine am Exterieur oder im Interieur des Fahrzeugs sichtbare Fläche, sodass optische Mängel nicht akzeptabel sind.

Der Erfindung liegt deshalb die Aufgabe zugrunde, die vorgenannten Nachteile zu überwinden und ein Zierteil sowie ein zugehöriges Verfahren zur Herstellung eines Zierteils bereitzustellen, das günstig und schnell herzustellen ist und eine optisch mängelfreie Sichtseite aufweist.

Diese Aufgabe wird durch die Merkmalskombination gemäß Patentanspruch 1 gelöst.

Erfindungsgemäß wird ein Verfahren zur Herstellung eines Zierteils für Fahrzeuge vorgeschlagen. Das Zierteil weist eine Sichtseite auf, die sich dadurch definiert, dass sie einem Betrachter in einem eingebauten Zustand des Zierteils zugewandt ist. Ist das Zierteil in oder an einem Fahrzeug montiert, ist für einen Betrachter des Zierteils die Sichtseite sichtbar. Das Verfahren zur Herstellung des Zierteils umfasst die Schritte:
a. Erzeugen eines Trägersubstrats aus einem Fasern umfassenden Faserverbundwerkstoff durch Einspritzen des Faserverbundwerkstoffs in eine Werkzeugkavität eines Spritzgusswerkzeugs, wobei auf einer ersten, der Sichtseite des Zierteils zugewandten Seite des Trägersubstrats eine Oberfläche ausgebildet wird,
b. Bilden einer Lackschicht durch unmittelbares Beschichten der Oberfläche des Trägersubstrats mit einem Lack,
c. Beschichten der Lackschicht mit einer Schutzschicht.

Der Faserverbundwerkstoff besteht aus einem Kunststoffmaterial und einer Vielzahl von Fasern. Das Kunststoffmaterial ist vorzugsweise ein thermoplastischer Kunststoff und die Fasern sind vorzugsweise Glasfasern. Der Lack, aus dem die Lackschicht gebildet wird, kann ein einfarbiger Lack, ein Metalliclack, ein Klavierlack oder ein anderer Effektlack sein und ist vorzugsweise ein Polyurethanlack. Zudem kann der Lack Pigmente oder weitere Zusätze enthalten. Die Schutzschicht ist vorzugsweise lichtdurchlässig und weiter vorzugsweise durchsichtig mit einem Transmissionsgrad von vorzugsweise bis zu 90%. Die Schutzschicht kann nach dem Beschichten zusätzlich aktiv ausgehärtet werden. Der beschriebene Beschichtungsprozess des Zierteils gebildet aus dem Bilden einer Lackschicht und dem Beschichten der Lackschicht mit einer Schutzschicht entspricht mithin einem zweistufigen Lackierverfahren.

Die Erfindung sieht dabei vor, dass die Lackschicht beim Beschichten der Oberfläche des Trägersubstrats unmittelbar auf die beim Erzeugen des Trägersubstrates ausgebildete Oberfläche aufgetragen wird. Zwischen der Oberfläche des Trägersubstrats und der Lackschicht wird keine Zwischenschicht angeordnet und die beim Erzeugen des Trägersubstrats ausgebildete Oberfläche des Trägersubstrats wird vor dem Beschichten mechanisch nicht verändert. Dadurch, dass keine Veränderung der Oberfläche notwendig ist, können Bearbeitungsschritte bei der Herstellung des Zierteils entfallen, wodurch die Herstellung des Zierteils deutlich günstiger wird. Trotz dem Entfall der Bearbeitungsschritte und dem unmittelbaren Lackieren auf den Faserverbundwerkstoff weist das mit dem erfindungsgemäße Verfahren hergestellte Zierteil eine optisch einwandfreie Oberfläche auf der Sichtseite auf.

Bei dem Verfahren zur Herstellung eines Zierteils wird beim Bilden der Lackschicht eine zu der Sichtseite weisende Lackoberfläche gebildet. Durch das aus dem Faserverbundwerkstoff gebildete Trägersubstrat, weist die Lackoberfläche Inhomogenitäten auf, die prozessbedingt bzw. bedingt durch den Faserverbundwerkstoff von den Fasern des Faserverbundwerkstoffs gebildet werden. Die Fasern stehen aus dem Trägersubstrat bzw. aus einer Oberfläche des Trägersubstrats hervor und durchbrechen die Lackoberfläche oder werden zum Teil von ihr eingeschlossen. Beim Beschichten der Lackschicht mit der Schutzschicht bildet die Schutzschicht eine die Sichtseite bestimmende homogene Schutzschichtoberfläche. Die Inhomogenitäten werden dabei von der Schutzschicht abgedeckt bzw. umschlossen, sodass die Fasern mit der Schutzschicht optisch eine Einheit bilden und sie für den Betrachter auf der Sichtseite nicht sichtbar sind. Die Fasern können sich dabei in die Schutzschicht hinein erstrecken und werden von dieser um umschlossen. Die Fasern sind in der Schutzschicht für einen Betrachter nicht erkennbar, sodass die Lackoberfläche scheinbar homogen und ohne Inhomogenitäten ist.

Ein Betrachter kann die Inhomogenitäten mit dem unbewehrten Auge ohne die Schutzschicht aus einer Entfernung von ca. 30 cm von der Lackoberfläche erkennen. Nach dem Beschichten der Lackschicht mit der Schutzschicht sind die Inhomogenitäten für den Betrachter mit dem unbewehrten Auge aus der vorgenannten Entfernung nicht mehr zu erkennen, sodass die Inhomogenitäten für ihn unter bzw. in der Schutzschicht nicht sichtbar sind.

Eine vorteilhafte Weiterbildung des Verfahrens sieht vor, dass die Lackschicht vor dem Beschichten mit der Schutzschicht ausgehärtet wird. Die Lackschicht wird dabei zumindest soweit ausgehärtet, dass diese beim Beschichten mit der Schutzschicht nicht mit der Schutzschicht vermischt wird.

Der Faserverbundwerkstoff ist bei einer vorteilhaften Weiterbildung ein faserverstärkter Kunststoff mit bis zu 40% Faservolumenanteil, vorzugsweise zwischen 10 und 30%.

Eine vorteilhafte Verfahrensvariante sieht dabei vor, dass der Faserverbundwerkstoff ein mit Glasfasern verstärkter thermoplastischer Kunststoff ist.

Das Beschichten des Trägersubstrats mit dem Lack wird bei einer Ausführungsvariante des Verfahrens mehrfach wiederholt, sodass die Lackschicht mehrschichtig ist.

Die Schutzschicht ist bei einer vorteilhaften Weiterbildungsalternative ein Klarlack. Ferner ist die Schutzschicht bis zu 2,0 mm dick (Lackschichtdicke). Hinzukommt, dass der Klarlack und/oder der Lack bei einer weiteren vorteilhaften Ausgestaltungsform des Verfahrens ein Polyurethanlack ist oder zumindest auf Polyurethan basiert.

Ferner ist die Schutzschicht bei dem Verfahren vorzugsweise zwischen 0,3 und 2 mm, vorzugsweise zwischen 0,3 und 1,0 mm dick (Schutzschichtdicke).

Auf einer zweiten, eine der Sichtseite gegenüberliegenden Einbauseite des Zierteils bildende Seite des Trägersubstrats, wird bei einer vorteilhaften Weiterbildung des Verfahrens beim Erzeugen des Trägersubstrats ein Befestigungselement zur Befestigung des Zierteils ausgebildet. Das Befestigungselement ist vorzugsweise integraler Bestandteil des Trägersubstrats.

Erfindungsgemäß wird ferner ein Zierteil für ein Fahrzeug vorgeschlagen, das nach dem erfindungsgemäßen Verfahren hergestellt wurde.

Das Zierteil ist folglich aus einem Trägersubstrat aus einem Faserverbundwerkstoff gebildet, das auf seiner Sichtseite unmittelbar eine Lackschicht umfasst, welche mit einer Schutzschicht beschichtet ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

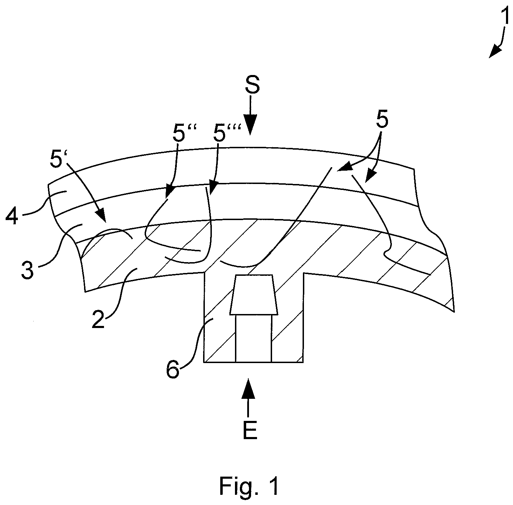

- Fig. 1: eine geschnittene Ansicht eines erfindungsgemäßen Zierteils.

Die Figur ist beispielhaft schematisch. Gleiche Bezugszeichen in der Figur weisen auf gleiche funktionale und/oder strukturelle Merkmale hin.

Das in Figur 1 gezeigte Zierteil 1 besteht aus dem Trägersubstrat 2, der Lackschicht 3 und der Schutzschicht 4. Auf der Einbauseite E des Zierteils wird integral durch das Trägersubstrat 2 ein Befestigungselement 6 ausgebildet, mit dem das Zierteil 1 an dem Fahrzeug befestigbar ist. Das Trägersubstrat 2 ist aus einem glasfaserverstärkten Kunststoff gebildet, wobei sich einige Fasern 5, 5', 5", 5'" des Trägersubstrats 2 aus der Oberfläche des Trägersubstrats 2 heraus in Richtung der Sichtseite S des Zierteils 1 erstrecken. Beim Bilden der Lackschicht 3 durch Lackieren der Oberfläche mit einem schwarzen, im Wesentlichen lichtundurchlässigen Lack werden die hervorstehenden Fasern 5', 5" zum Teil von der Lackschicht 3 überdeckt. Ein weiterer Teil der der Fasern 5, 5"' durchläuft jedoch die Lackschicht 3 und bildet an der Lackoberfläche zu der Sichtseite S hin Inhomogenitäten. Die aus einem Klarlack gebildete Schutzschicht 4 bestimmt die Sichtseite S des Zierteils und bedeckt bzw. umschließt die Fasern 5, 5"'. Durch die Schutzschicht 4 werden die Fasern 5, 5"', welche sich durch die Lackschicht 3 erstrecken, optisch kaschiert, sodass die Fasern 5, 5'" in der Schutzschicht 4 und vor der Lackschicht 3 für einen Betrachter nicht zu erkennen sind, wodurch die Sichtseite S des Zierteils 1 optisch homogen erscheint.

## Patentansprüche

1. Verfahren zur Herstellung eines Zierteils (1) für Fahrzeuge mit einer Sichtseite (S) umfassend die Schritte
a. Erzeugen eines Trägersubstrats (2) aus einem Fasern (5) umfassenden Faserverbundwerkstoff durch Einspritzen des Faserverbundwerkstoffs in eine Werkzeugkavität eines Spritzgusswerkzeugs, wobei auf einer ersten, der Sichtseite (S) des Zierteils (1) zugewandten Seite des Trägersubstrats (2) eine Oberfläche ausgebildet wird,
b. Bilden einer Lackschicht (3) durch unmittelbares Beschichten der beim Erzeugen des Trägersubstrats ausgebildeten Oberfläche des Trägersubstrats (2) mit einem Lack, wobei
beim Bilden der Lackschicht (3) eine zu der Sichtseite (S) weisende Lackoberfläche gebildet wird, die Inhomogenitäten aufweist, die prozessbedingt von den Fasern (5) des Faserverbundwerkstoffs gebildet werden, die aus dem Trägersubstrat (2) hervorstehen und die Lackoberfläche durchbrechen und
die Schutzschicht (4) beim Beschichten der Lackschicht (3) mit der Schutzschicht (4) eine die Sichtseite (S) bestimmende homogene Schutzschichtoberfläche bildet und die Inhomogenitäten abgedeckt werden, sodass die Inhomogenitäten auf der Sichtseite (S) nicht sichtbar sind,
c. Beschichten der Lackschicht (3) mit einer Schutzschicht (4).

2. Verfahren zur Herstellung eines Zierteils nach einem der vorhergehenden Ansprüche, wobei die Lackschicht (3) vor dem Beschichten mit der Schutzschicht (4) ausgehärtet wird.

3. Verfahren zur Herstellung eines Zierteils nach einem der vorhergehenden Ansprüche, wobei
der Faserverbundwerkstoff ein faserverstärkter Kunststoff mit bis zu 40% Faservolumenanteil ist.

4. Verfahren zur Herstellung eines Zierteils nach dem vorhergehenden Anspruch, wobei
der Faserverbundwerkstoff ein mit Glasfasern verstärkter thermoplastischer Kunststoff ist.

5. Verfahren zur Herstellung eines Zierteils nach einem der vorhergehenden Ansprüche, wobei
das Beschichten des Trägersubstrats (2) mit dem Lack mehrfach wiederholt wird, sodass die Lackschicht (3) mehrschichtig ist.

6. Verfahren zur Herstellung eines Zierteils nach einem der vorhergehenden Ansprüche, wobei
die Schutzschicht (4) bis zu 2,0 mm dick ist.

7. Verfahren zur Herstellung eines Zierteils nach dem vorhergehenden Anspruch, wobei
die Schutzschicht (4) zwischen 0,3 und 1,0 mm dick ist.

8. Verfahren zur Herstellung eines Zierteils einem der vorhergehenden Ansprüche, wobei
die Schutzschicht (4) ein Klarlack ist.

9. Verfahren zur Herstellung eines Zierteils nach einem der vorhergehenden Ansprüche, wobei
die Schutzschicht aus Polyurethanlack gebildet ist.

10. Verfahren zur Herstellung eines Zierteils nach einem der vorhergehenden Ansprüche, wobei
der Lack ein zur Bildung der Lackschicht auf der Oberfläche des Faserverbundwerkstoffes ein Polyurethanlack ist.

11. Verfahren zur Herstellung eines Zierteils nach einem der vorhergehenden Ansprüche, wobei
auf einer zweiten, eine Einbauseite (E) des Zierteils (1) bildenden Seite des Trägersubstrats (2), die der Sichtseite (S) gegenüberliegt, beim Erzeugen des Trägersubstrats (2) ein Befestigungselement (6) zur Befestigung des Zierteils ausgebildet wird.

12. Zierteil für ein Fahrzeug, hergestellt nach einem Verfahren nach einem der vorhergehenden Ansprüche.

## Claims

1. A method for producing a trim part (1) with a visible side (S) for use in vehicles, comprising the steps:
a. producing a support substrate (2) from a fiber composite material comprising fibers (5) by injecting the fiber composite material into a mold cavity of an injection mold, wherein a surface is formed on a first side of the support substrate (2) that faces the visible side (S) of the trim part (1),
b. forming a lacquer layer (3) by directly coating the surface of the support substrate (2) that is formed when the support substrate is produced with a lacquer, wherein when the lacquer layer (3) is formed, a lacquer surface facing the visible side (S) is formed, which has inhomogeneities that are formed as a result of the process by the fibers (5) of the fiber composite material protruding from the support substrate (2) and penetrating the lacquer surface, and when the lacquer layer (3) is coated with the protective layer (4), the protective layer (4) forms a homogeneous protective layer surface that defines the visible side (S), and the inhomogeneities are covered so that the inhomogeneities on the visible side (S) are not visible
c. coating the lacquer layer (3) with a protective layer (4).

2. The method for producing a trim part according to any one of the preceding claims, wherein the lacquer layer (3) is cured before being coated with the protective layer (4).

3. The method for producing a trim part according to any one of the preceding claims, wherein the fiber composite material is a fiber-reinforced plastic having a fiber volume of up to 40%.

4. The method for producing a trim part according to the preceding claim, wherein the fiber composite material is a thermoplastic reinforced with glass fibers.

5. The method for producing a trim part according to any one of the preceding claims, wherein the coating of the support substrate (2) with the lacquer is repeated multiple times, such that the lacquer layer (3) is multilayered.

6. The method for producing a trim part according to any one of the preceding claims, wherein the protective layer (4) is up to 2.0 mm thick.

7. The method for producing a trim part according to the preceding claim, wherein the protective layer (4) is between 0.3 and 1.0 mm thick.

8. The method for producing a trim part according to any one of the preceding claims, wherein the protective layer (4) is a clear lacquer.

9. The method for producing a trim part according to any one of the preceding claims, wherein the protective layer is formed from polyurethane lacquer.

10. The method for producing a trim part according to any one of the preceding claims, wherein the lacquer used to form the lacquer layer on the surface of the fiber composite material is a polyurethane lacquer.

11. The method for producing a trim part according to any one of the preceding claims, wherein on a second side of the support substrate (2), which forms an installation side (E) of the trim part (1) opposite the visible side (S) thereof, a fastening element (6) for fastening the trim part is formed during production of the support substrate (2).

12. A trim part for a vehicle, produced by a method according to any one of the preceding claims.

## Revendications

1. Procédé pour fabriquer un élément de garniture (1) pour des véhicules avec une face visible (S) comprenant les étapes
a. de production d'un substrat support (2) à partir d'un matériau composite renforcé par des fibres comprenant des fibres (5) par injection du matériau composite renforcé par des fibres dans une cavité de moule d'un moule de moulage par injection, dans lequel une surface est réalisée sur une première face du substrat support (2) tournée vers la face visible (S) de l'élément de garniture (1),
b. de formation d'une couche de peinture (3) par revêtement immédiat de la surface du substrat support (2) réalisée lors de la production du substrat support avec une peinture, dans lequel
lors de la formation de la couche de peinture (3), une surface de peinture dirigée vers la face visible (S) est formée, qui présente des inhomogénéités, qui sont formées pour des raisons propres au processus par les fibres (5) du matériau composite renforcé par des fibres, qui font saillie du substrat support (2) et percent la surface de peinture et
la couche de protection (4) lors du revêtement de la couche de peinture (3) avec la couche de protection (4) forme une surface de couche de protection homogène définissant la face visible (S) et les inhomogénéités sont recouvertes, de sorte que les inhomogénéités ne sont pas visibles sur la face visible (S),
c. de revêtement de la couche de peinture (3) avec une couche de protection (4).

2. Procédé pour fabriquer un élément de garniture selon l'une quelconque des revendications précédentes, dans lequel la couche de peinture (3) est durcie avant le revêtement avec la couche de protection (4).

3. Procédé pour fabriquer un élément de garniture selon l'une quelconque des revendications précédentes, dans lequel
le matériau composite renforcé par des fibres est une matière plastique renforcée par des fibres avec jusqu'à 40 % de pourcentage volumique de fibres.

4. Procédé pour fabriquer un élément de garniture selon la revendication précédente, dans lequel
le matériau composite renforcé par des fibres est un thermoplastique renforcé par des fibres de verre.

5. Procédé pour fabriquer un élément de garniture selon l'une quelconque des revendications précédentes, dans lequel
le revêtement du substrat support (2) avec la peinture est répété plusieurs fois, de sorte que la couche de peinture (3) est multicouche.

6. Procédé pour fabriquer un élément de garniture selon l'une quelconque des revendications précédentes, dans lequel
la couche de protection (4) présente jusqu'à 2,0 mm d'épaisseur.

7. Procédé pour fabriquer un élément de garniture selon la revendication précédente, dans lequel
la couche de protection (4) présente une épaisseur comprise entre 0,3 et 1,0 mm.

8. Procédé pour fabriquer un élément de garniture selon l'une quelconque des revendications précédentes, dans lequel
la couche de protection (4) est une peinture transparente.

9. Procédé pour fabriquer un élément de garniture selon l'une quelconque des revendications précédentes, dans lequel
la couche de protection est formée de peinture polyuréthane.

10. Procédé pour fabriquer un élément de garniture selon l'une quelconque des revendications précédentes, dans lequel
la peinture une pour former la couche de peinture sur la surface du matériau composite renforcé par des fibres est une peinture polyuréthane.

11. Procédé pour fabriquer un élément de garniture selon l'une quelconque des revendications précédentes, dans lequel
un élément de fixation (6) pour fixer l'élément de garniture est réalisé sur une deuxième face du substrat support (2) formant une face de montage (E) de l'élément de garniture (1), qui est opposée à la face visible (S), lors de la production du substrat support (2).

12. Elément de garniture pour un véhicule, fabriqué selon un procédé selon l'une quelconque des revendications précédentes.
